# EUROPÄISCHE PATENTSCHRIFT

(11) **EP 1 985 434 B1**
(45) Veröffentlichungstag und Bekanntmachung des Hinweises auf die Patenterteilung: **02.01.2013**
(21) Anmeldenummer: 08007773.8
(22) Anmeldetag: 22.04.2008
(51) Int. Cl.: B29C 70/34, B29C 70/44, B60B 1/00, B60B 5/02, B60B 21/06

(54) **Rad und Verfahren zur Herstellung eines Rades**
Wheel and method for manufacturing a wheel
Roue et procédé de fabrication d'une roue

(30) Priorität: 24.04.2007 DE 102007019611
(43) Veröffentlichungstag der Anmeldung: 29.10.2008
(73) Patentinhaber: DT Swiss AG, 2500 Biel (CH)
(72) Erfinder: Heyse, Joachim, 82515 Wolfratshausen (DE)
(74) Vertreter: Schütte, Hartmut

(56) Entgegenhaltungen:
- EP-A- 1 231 077
- EP-A- 1 386 756
- EP-A- 1 506 882
- WO-A-98/57812
- DE-A1-102007 036 065

## Beschreibung

Die Erfindung betrifft ein Rad, eine Felge und ein Verfahren zur Herstellung eines Rades, insbesondere für Fahrräder. Obwohl die Erfindung im folgenden mit Bezug auf den Einsatz an Fahrrädern beschrieben wird, so ist die Erfindung auch an sonstigen Ein- und Mehrrädern möglich, insbesondere an Fahrradanhängern, Rollern oder Rollstühlen.

Im Bereich der hoch und höchst qualitativen Sportprodukte, sowie im Rennsportbereich ist das Gewicht der Komponenten von höchster Bedeutung. Um das Gewicht der Räder und Felgen zu verringern, sind Felgen aus faserverstärktem Kunststoff bekannt geworden, die bei einem geringeren Gesamtgewicht eine vergleichbare oder sogar höhere Stabilität als Metallfelgen erzielen.

Mit der gattungsgemässen EP 1 386 756 A2 ist eine Felge für ein Fahrrad bekannt geworden, wobei auf einen Kern mehrere separate Lagen eines Gewebes aufgebracht werden. Dadurch wird ein mehrfaches Auflegen der separaten Lagen erforderlich.

Die DE 10 2007 0.36 065 A1 zeigt ein Rad mit einer Felge, einer Nabe und einer Vorrichtung zur Verbindung der Felge mit der Nabe, wobei die Seitenwände der Felge aus einer Mehrzahl übereinander gelegter separater Verstärkungslagen bestehen. Obwohl die Felge insgesamt hinterher aus einem einzigen Stück besteht, ist bei der Herstellung eine Vielzahl einzelner Lagen separat in die Form einzulegen.

Die EP 1 506 882 A offenbart eine Felge aus einem Faserverbundwerkstoff, wobei der Felgenboden, die Felgenflanken und das Felgenbett jeweils aus einer Vielzahl einzelner Gewebelagen aus einem Faserverbundwerkstoff bestehen. Auch hier müssen die Fasergewebelagen einzeln und separat aufeinander gelegt werden.

Die WO 98/57812 A zeigt ein Rad, bei dem die Felge einstückig mit den Speichen hergestellt wird. Dabei bestehen die Felgenflanken aus einer Mehrzahl separater Geflechte.

Vor diesem technischen Hintergrund ist es die Aufgabe der vorliegenden Erfindung ein Rad und eine Felge zur Verfügung zu stellen, welche bei einer hohen Qualität ein geringes Gewicht mit einer hohen Stabilität ermöglicht. Ein weiterer Aspekt ist es, einfach herstellbare Felgen und Räder anzugeben.

Diese Aufgabe wird gelöst durch das erfindungsgemäß Verfahren mit den Merkmalen des Anspruchs 1. Das erfindungsgemäße Rad ist Gegenstand von Anspruch 11 und die Herstellform ist Gegenstand von Anspruch 17. Bevorzugte Ausgestaltungen und Weiterbildungen sind Gegenstand der Unteransprüche.

Bei dem erfindungsgemäßen Verfahren zur Herstellung eines Rades, welches insbesondere für den Einsatz an einem Fahrrad geeignet ist, weist das herzustellende Rad einen Nabenkörper, eine Felge und den Nabenkörper und die Felge verbindende Speichen auf. Dabei umfasst die Felge ein Felgenbett, einen Felgenboden und das Felgenbett und den Felgenboden verbindende Felgenflanken. Das erfindungsgemäße Verfahren umfasst die folgenden Schritte in dieser oder einer anderen sinnvollen Reihenfolge:

Es wird ein erster mehrlagiger und einstückiger Gewebeabschnitt eines Fasergewebe umfassendes Materials auf ein erstes Formteil einer Herstellform entlang des Umfangs der herzustellenden Felge aufgelegt. Das Auflegen des Gewebeabschnitts erfolgt dabei derart, dass der erste Gewebeabschnitt dazu geeignet und bestimmt ist, eine Felgenflanke der herzustellenden Felge zu bilden.

Auf das erste Formteil wird eine erste Anzahl von Speichen unter vorbestimmten Winkeln zueinander aufgelegt, und zwar derart, dass die radial äußeren Speichenenden auf dem ersten Gewebeschnitt insbesondere direkt aufliegen.

Weiterhin wird wenigstens ein Kern auf den ersten Gewebeabschnitt aufgelegt, der insbesondere an die entsprechende Innenkontur der herzustellenden Felge angepasst ist.

Auf eine Innenfläche eines Formrings wird wenigstens ein Gewebestreifen aufgelegt und der Formring wird in das erste Formteil eingelegt, sodass der Gewebestreifen wenigstens einen Teil des Felgenbettes der herzustellenden Felge bildet.

Weiterhin wird ein aufblasbarer oder mit einem Fluid füllbarer Schlauch mit einem Gewebeabschnitt umgeben und der aufblasbare Schlauch wird in das erste Formteil eingelegt.

Wenigstens eine zweite Anzahl von Speichen wird unter vorbestimmten Winkeln zueinander auf die Herstellform aufgelegt, und zwar derart, dass die radialen äußeren Speichenenden wenigstens teilweise auf dem Kern aufliegen.

Auf ein zweites Formteil der Herstellform wird entlang des Umfangs der herzustellenden Felge ein zweiter mehrlagiger und einstückiger Gewebeabschnitt eines Fasergewebe umfassenden Materials aufgelegt, und zwar derart, dass der zweite Gewebeabschnitt dazu geeignet und bestimmt ist, die zweite Felgenflanke zu bilden.

Danach wird die Herstellform verschlossen und es wird der aufblasbare Schlauch auf einen erhöhten Druck aufgeblasen. Gegebenenfalls wird die Herstellform auf eine entsprechend ausgewählte Temperatur gebracht und für eine entsprechende Zeitdauer temperiert.

Nach dem Aushärten der harzgetränkten faserverstärkten Materialien wird das Rad aus der Herstellform entnommen. Dabei ist das Rad insgesamt ein einstückiges und einheitliches Teil.

Mit dem erfindungsgemäßen Verfahren ist es möglich, Räder herzustellen, die ein geringes Gewicht aufweisen und die hoch belastbar sind. Die erzielbare Qualität ist hoch.

Vorzugsweise ist der erste und/oder der zweite Gewebeabschnitt jeweils als Gewebeschlauch ausgebildet, der flach liegend einen mehrlagigen und einstückigen Gewebeabschnitt bildet. Der Einsatz eines Gewebeschlauches als ersten oder zweiten Gewebeabschnitt bietet erhebliche Vorteile, da der flach liegende Gewebeschlauch zwei direkt aufeinander liegende Lagen umfasst. Der flach liegende Gewebeschlauch weist eine besonders hohe Drappierbarkeit auf, die eine nahezu ideale Positionierung des Gewebeabschnitts entlang des Umfangs des ersten Formteils ermöglicht.

Die Felgenflanken erstrecken sich vom minimalen Innendurchmesser der Felge bis zum maximalen Außendurchmesser der Felge, sodass das die Felgenflanke bildende Gewebematerial beim Aufliegen eine solche Drappierbarkeit aufweisen muss, dass die unterschiedlichen Umfangswege kompensiert werden, ohne Schäden in der Struktur der Felgenflanken zu bewirken. Das wird hier erreicht.

Durch den Einsatz eines Gewebeschlauchs, der flach liegend eine Felgenflanke bildet, hat sich überraschenderweise eine hervorragende Drappierbarkeit ergeben, die eine hoch qualitative Felgenflanke ermöglicht, bei der sowohl im radialen inneren als auch im radial äußeren Bereich eine gleichbleibend hohe Qualität erreicht wird.

Während bei konventionellen Gewebestreifen oftmals eine erhebliche Beeinflussung der Gewebestruktur und des Maschenabstandes über den Umfang der Felgenflanke beobachtet werden kann, erlaubt der Einsatz eines flach liegenden Gewebeschlauchs eine hoch qualitative Ausbildung der Felgenflanke.

Alternativ oder ergänzend zu dem Einsatz eines Gewebeschlauchs ist es auch möglich, den ersten und/oder den zweiten Gewebeabschnitt entlang einer Umklappkante umzuklappen bzw. zu falten, um einen einstückigen Gewebeabschnitt zu bilden, der über eine entsprechend verdoppelte Lagenanzahl verfügt.

In einer alternativen Ausgestaltung wird der mehrlagige und einstückige erste und/oder zweite Gewebeabschnitt aus einem Gewebestreifen hergestellt, der entlang wenigstens einer Umklappkante umgeklappt bzw. gefaltet wird, um den einstückigen und mehrlagigen Gewebeabschnitt zu bilden.

Beispielsweise kann ein einlagiger und rechteckiger Gewebestreifen einer bestimmten Länge und Breite auf einer Unterlage positioniert werden und entlang seiner Mittellinie gefaltet werden, um einen zweilagigen und einstückigen Gewebeabschnitt zur Verfügung zu stellen.

Möglich ist es auch, einen z.B. rechteckigen Gewebestreifen auf einer Unterlage aufzulegen, wo jeweils etwa ein Viertel der Breite zur Mitte hin umgefaltet wird, sodass sich insgesamt ein schlauchartiger Gewebeabschnitt ergibt, der allerdings in Längsrichtung praktisch aufgeschnitten wurde. Die Stoßkante der beiden Seiten liegt bei dieser Ausgestaltung in der Mitte des Gewebeabschnitts. Selbstverständlich kann die Stoßkante auch näher zu der einen oder zu der anderen Seite positioniert werden. Ein derart gefalteter Gewebeabschnitt verfügt über ähnliche Eigenschaften wie der zuvor beschriebene Gewebeschlauch und verfügt insbesondere über nahezu die gleichen Drappiereigenschaften, sodass ein gleichmäßiges Auflegen des ersten Gewebeabschnitts auf das erste Formteil möglich ist, insbesondere aber nicht nur bei Einsatz von Prepregs.

Dadurch, dass keine außenliegende Kanten des Gewebestreifens an der radial inneren oder der radial äußeren Felgenkante anliegen, wird ein Verziehen des Gewebes vermieden und eine hohe Flächenqualität der Felgenflanken ermöglicht.

Zur Unterstützung der Drappierbarkeit wird in allen zuvor beschriebenen Ausgestaltungen der erste und/oder zweite Gewebeabschnitt vorzugsweise aus einem Gewebe hergestellt, dessen Fäden unter einem Winkel zur Längserstreckung des Gewebeabschnitts ausgerichtet sind. Vorzugsweise beträgt der Winkel wenigsten 15°. Bei einem Winkel von 45° haben bei einem rechtwinkligen Gewebe beide Faserrichtungen den gleichen Winkel zur Längserstreckung des Gewebeabschnitts. Das ermöglicht eine besonders gute Drappierbarkeit, bei der örtliche Unterschiede der Gewebequalität in der Felgenflanke weitestgehend vermieden werden.

In bevorzugten Weiterbildungen des erfindungsgemäßen Verfahrens wird der Kern auf den ersten Gewebeabschnitt in der Nähe des Felgenbodens und insbesondere direkt auf den Felgenboden aufgelegt.

Der Kern wird insbesondere etwas größer dimensioniert, um beim Aushärten in der Herstellform einen erhöhten Druck auf die daran anliegenden Lagen auszuüben.

Der Kern kann einteilig und beispielsweise geschlitzt ausgeführt sein. Der Kern kann aber auch aus mehreren Teilen bestehen, die entlang des Umfangs aufgelegt werden.

Ebenso ist die Verwendung von zwei oder mehr separaten Kernen möglich, die in unterschiedlichen radialen Abständen angeordnet werden.

Der Formring weist vorteilhafterweise radial nach innen hin eine abgerundete Kontur auf, welche an die Form des Felgenbettes angepasst ist. Dadurch wird durch den Formring direkt die Form des Felgenbettes vorgegeben, womit eine hohe Reproduzierbarkeit ermöglicht wird.

Der Formring kann einteilig ausgebildet sein und einen Schlitz aufweisen.

Vorzugsweise wird der Formring zunächst mit einem Gewebeschlauch oder mit einem aus einem entsprechend umgeklappten Gewebestreifen bestehenden Gewebeabschnitt belegt und anschließend mit einem Gewebestreifen belegt, die bei dem fertigen Rad das Felgenbett bilden.

Der Formring kann etwa parallele Seitenflächen aufweisen, sodass bei Belegung der Seitenflächen mit Gewebematerial auch Felgen mit Felgenhörnern herstellbar sind.

In allen Ausgestaltungen werden die Formteile und der Formring insbesondere vor dem Auflegen des Gewebematerials mit einem Trennmittel beschichtet, um ein Anhaften des Gewebematerials an den Formteilen oder an dem Formring zu verhindern.

Der aufblasbare Schlauch kann vor dem Einlegen mit einem Gewebeschlauch als Gewebeabschnitt umgeben werden. Möglich ist aber auch, dass der aufblasbare Schlauch mit wenigstens einem Gewebestreifen umwickelt wird, oder dass an den aufblasbaren Schlauch einzelne Gewebestreifen angelegt werden, die sich um den Schlauch herum erstrecken.

Grundsätzlich ist die radiale Positionierung des von dem Gewebeabschnitt umgebenden aufblasbaren Schlauches in unterschiedlichen radialen Positionen möglich. In einer bevorzugten Ausgestaltung wird der aufblasbare Schlauch in das erste Formteil zwischen dem Formring und dem Kern eingelegt. Dadurch wird eine effektive Druckausübung durch den aufblasbaren Schlauch gewährleistet, sodass sowohl das Felgenbett als auch der für die Aufnahme der Speichen radial innere Bereich entsprechend ausgebildet wird.

In anderen Ausgestaltungen kann der aufblasbare Schlauch zwischen dem Kern und dem Felgenboden in das ersten Formteil eingelegt werden; beispielsweise wenn der Kern radial weiter außen eingabracht wird und wenn der Kern dafür vorgesehen ist, die Stütze für das Felgenbett zur Verfügung zu stellen.

Vorzugsweise wird zu Beginn des Verfahrens zentrisch zu der Herstellform ein Nabenkörperhalter angeordnet, auf den dann ein erster bzw. (in der Form) unterer Nabenaußendeckel, ein erster bzw. unterer Nabeninnendeckel, ein zweiter bzw. (in der Form) oberer Nabeninnendeckel und ein zweiter bzw. oberer Nabenaußendeckel in dieser Reihenfolge aufgeschoben werden.

Anschließend werden zwischen dem zweiten Nabenaußendeckel und dem zweiten Nabeninnendeckel die radial inneren Speichenenden der ersten bzw. oberen Speichen eingelegt, bevor der zweite Nabenaußendeckel mit dem zweiten Nabeninnendeckel in Kontakt gebracht und über ein Verbindungsmittel, insbesondere ein Harz, fest zu einem zweiten Nabendeckel verbunden wird. Dadurch werden die Speichen fest an dem Nabendeckel gehalten.

In entsprechender Art und Weise werden vorzugsweise zwischen dem ersten Nabenaußendeckel und dem ersten Nabeninnendeckel die radial inneren Speichenenden der zweiten bzw. unteren Speichen eingelegt, bevor der erste Nabenaußendeckel mit dem ersten Nabeninnendeckel in Kontakt gebracht und über ein Verbindungsmittel fest zu einem ersten Nabendeckel verbunden wird. Somit stellen die Nabendeckel praktisch die Nabenflansche herkömmlicher Räder dar, von denen sich aus die Speichen radial nach außen erstrecken.

Besonders bevorzugt weisen die Speichen einen Speichenkörper auf, über die sich nach außen hin aus die den Speichenkörper bildenden einzelnen Fasern erstrecken, sodass die über das radial innere Ende des Speichenkörpers hinausstehenden Einzelfasern zwischen den jeweiligen ersten und zweiten Nabenaußen- und Nabeninnendeckeln aufgefächert werden, um durch das Verbindungsmittel bzw. Harz fest zwischen dem jeweiligen Nabeninnen- und Nabenaußendeckel eingebettet zu werden. Dadurch wird eine hohe Belastbarkeit erzielt.

Vorzugsweise werden die entsprechend ausgebildeten radial äußeren Speichenenden der ersten und der zweiten Speichen entsprechend aufgefächert, wenn sie auf die Herstellform aufgelegt werden, sodass die Speichen auch an den Felgenflanken in gespreizter aufgefächerter Form aufgenommen werden, wodurch eine stabile und leichte Felge herstellbar ist, da keine zusätzlichen Verstärkungen für Speichennippel etc. vorgesehen werden müssen.

Nach dem Aushärten der Felge und der damit verbundenen Speichen und Nabendeckel wird vorzugsweise zwischen dem ersten und dem zweiten Nabendeckel ein Nabenrohr oder eine Nabenhülse eingeführt, welches derart bemessen ist, dass eine entsprechende bzw. die gewünschte Speichenspannung erzeugt wird. Das Nabenrohr zwischen den Nabendeckeln wird über ein geeignetes Verbindungsmittel wie z.B. ein entsprechendes Harz mit den Nabendeckeln verbunden.

In allen Fällen kann vorgetränktes Gewebematerial in Form von z.B. Prepregs verwendet werden. Es kann aber auch ein trockenes Gewebematerial verwendet werden, welches mit einem geeigneten Harz getränkt oder bestrichen wird. Außerdem ist es möglich, das teilweise Prepregs verwendet werden, während teilweise trockenes Gewebematerial verwendet wird, welches bei der Herstellung mit einem Harz getränkt oder bestrichen wird.

Die Anmelderin behält sich vor, eine Felge separat und unabhängig von dem zuvor beschriebenen Verfahren zu beanspruchen. Eine solche Felge ist insbesondere für den Einsatz an einem Fahrrad vorgesehen und umfasst wenigstens ein Felgenbett, einen Felgenbogen und das Felgenbett und den Felgenboden verbindende Felgenflanken. Die erfindungsgemäße Felge besteht vorzugsweise im Wesentlichen und kann auch vollständig aus einem faserverstärkten Material bestehen. Die Felgenflanken der erfindungsgemäßen Felge bestehen aus einem einstückigen und mehrlagigen Gewebeabschnitt, wobei die Gewebeabschnitte wenigstens an den radial äußeren Kanten aufeinander geklappte bzw. gefaltete Gewebelagen aufweisen.

In einer Weiterbildung der erfindungsgemäßen Felge besteht jede Felgenflanke aus einem einstückigen und mehrlagigen Gewebeabschnitt. Dabei weisen die Gewebeabschnitte der beiden Felgenflanken an jeweils einer radialen Kante aufeinandergeklappte bzw. gefaltete Gewebelagen auf. Insbesondere ist es auch möglich, dass an einer radial inneren und an einer radial äußeren Kante aufeinander geklappte Gewebelagen vorliegen.

Das erfindungsgemäße Rad ist insbesondere für die Verwendung an einem Fahrrad vorgesehen und umfasst eine Felge, einen Nabenkörper und die Felge und den Nabenkörper verbindende Speichen. Das erfindungsgemäße Rad besteht vorzugsweise wenigstens im Wesentlichen aus einem faserverstärktem Material. Die Felge des erfindungsgemäßen Rades umfasst ein Felgenbett, einen Felgenboden und das Felgenbett und den Felgenboden verbindende Felgenflanken. Wenigstens eine Felgenflanke wird durch einen mehrlagigen und einstückigen Gewebeabschnitt eines Fasergewebe umfassenden Materials gebildet.

Das erfindungsgemäße Rad kann mit hoher Qualität hergestellt werden, wobei das Gewicht besonders gering ist.

Die Anzahl der Speichen des erfindungsgemäßen Rades beträgt insbesondere wenigstens fünf und insbesondere wenigstens acht und liegt vorzugsweise zwischen zwölf und dreißig.

Vorteilhafterweise wird die eine Felgenflanke durch einen ersten mehrlagigen und einstückigen Gewebeabschnitt und die andere Felgenflanke wird durch einen zweiten mehrlagigen und einstückigen Gewebeabschnitt gebildet.

Wie zuvor beschrieben, können die Gewebeabschnitte jeweils als Gewebeschlauch ausgebildet sein oder aus z.B. einen rechteckigen Gewebestreifen geformt werden, der entlang wenigstens einer Umklappkante umgeklappt wird, um einen einstückigen und mehrlagigen Gewebeabschnitt zu bilden.

Vorzugsweise liegt der Kern auf dem Felgenboden auf. Der Kern kann aus mehreren Teilen bestehen, die entlang des Umfangs angeordnet sind. Es können auch zwei oder mehr separate Kerne vorgesehen sein, die in unterschiedlichen radialen Abständen angeordnet sind.

Das Felgenbett kann durch einen oder mehrere Gewebestreifen oder durch einen Gewebeschlauch und einen Gewebestreifen gebildet werden.

In allen Ausgestaltungen ist es möglich, dass zwischen Felgenboden und Felgenbett ein Quersteg zur Versteifung der Felge vorgesehen ist. Der Quersteg kann durch einen Gewebeabschnitt, einen Gewebestreifen oder durch einen Gewebeschlauch gebildet werden.

Der Nabenkörper kann einen ersten Nabendeckel aufweisen, der durch einen ersten Nabenaußendeckel und einen ersten damit verbundenen Nabeninnendeckel gebildet wird. Des weiteren ist ein zweiter Nabendeckel vorgesehen, der durch einen zweiten Nabeninnendeckel und einen zweiten damit verbundenen Nabenaußendeckel gebildet wird. Zwischen den beiden Nabendeckeln ist eine Nabenhülse bzw. ein Nabenrohr vorgesehen.

Vorzugsweise sind an den jeweiligen Speichenenden die Fasern aufgefächert und an der Felge bzw. an den Nabendeckeln formschlüssig aufgenommen.

Zur Herstellung eines Rades, insbesondere für Fahrräder, welches einen Nabenkörper, eine Felge und den Nabenkörper und die Felge verbindende Speichen umfasst, wobei die Felge ein Felgenbett, einen Felgenboden und das Felgenbett und den Felgenboden verbindende Felgenflanken aufweist, wird eine Vorrichtung verwendet, die eine Herstellform aufweist.

Die Herstellform umfasst ein erstes Formteil, welches dazu bestimmt ist, einen ersten mehrlagigen und einstückigen Gewebeabschnitt eines Fasergewebe umfassenden Materials aufzunehmen. Das erste Formteil ist etwa kreisförmig ausgebildet und weist eine an die Außenkontur einer Felgenhälfte angepasste Querschnittsform auf.

Ein Teilungsring ist vorgesehen, der zentral in der Herstellform angeordnet wird und zur Winkeleinstellung der Speichen dient, die in Aussparungen des Teilungsringes eingelegt werden.

Ein Kern ist vorgesehen, der im Bereich des Felgenbodens auf das erste Formteil aufgelegt wird.

Weiterhin wird ein Formring verwendet, dessen Innenfläche an die Form des Felgenbettes angepasst ist.

Außerdem ist ein zweites Formteil vorgesehen, welches dafür bestimmt ist, auf das erste Formteil verbracht und damit verbunden zu werden, um die Herstellform zu schließen.

Weitere Vorteile und Anwendungsmöglichkeiten der vorliegenden Erfindung ergeben sich aus dem Ausführungsbeispiel, das nun mit Bezug auf die beiliegenden Figuren beschrieben wird.

In den Figuren zeigen:
- Fig. 1: eine Seitenansicht eines teilweise geschnittenen Rades mit radialer Speichenausrichtung;
- Fig. 2: eine teilweise geschnittene Seitenansicht eines Rades mit gekreuzten Speichen;

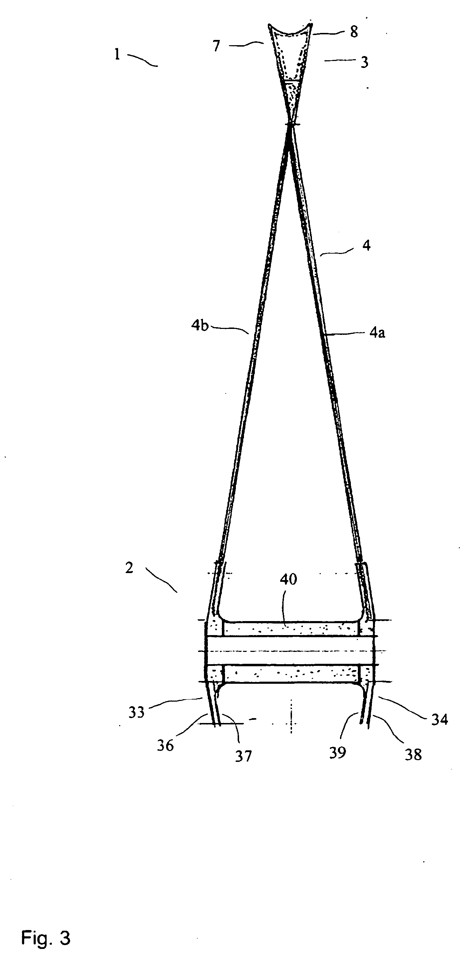

- Fig. 3: eine quergeschnittene Ansicht eines erfindungsgemäßen Rades;
- Fig. 4: einen Querschnitt durch die Herstellungsform und die Felge nach Fig. 3;
- Fig. 5: eine prinzipielle Ansicht eines Gewebeschlauchs;
- Fig. 6: eine prinzipielle Ansicht eines umgelegten Gewebestreifens;
- Fig. 7: eine Aufsicht auf einen Gewebeabschnitt; und
- Fig. 8: eine prinzipielle Querschnittsansicht einer Halbform zur Herstellung der Speichen.

Im folgenden wird nun mit Bezug auf die beiliegenden Figuren ein Ausführungsbeispiel der vorliegenden Erfindung erläutert.

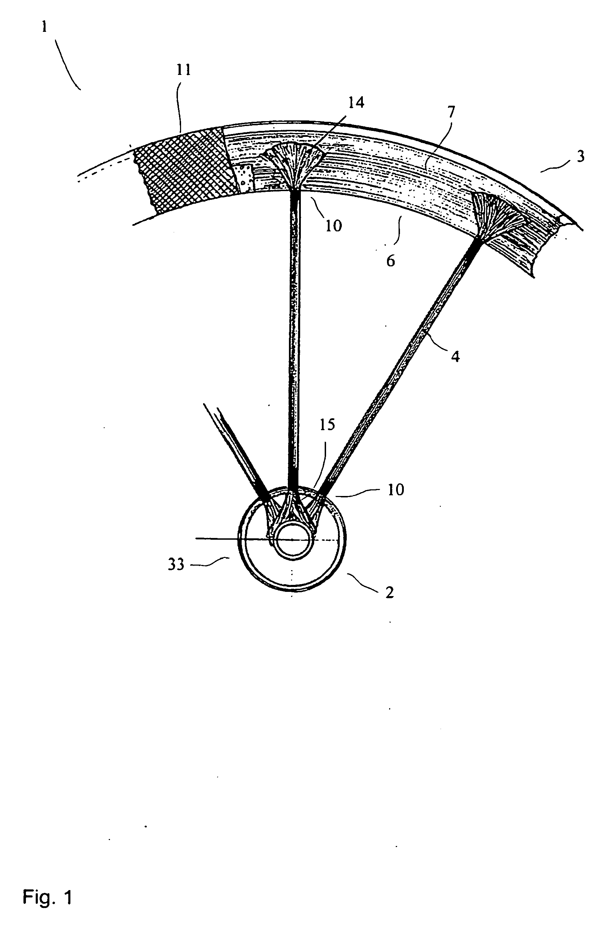

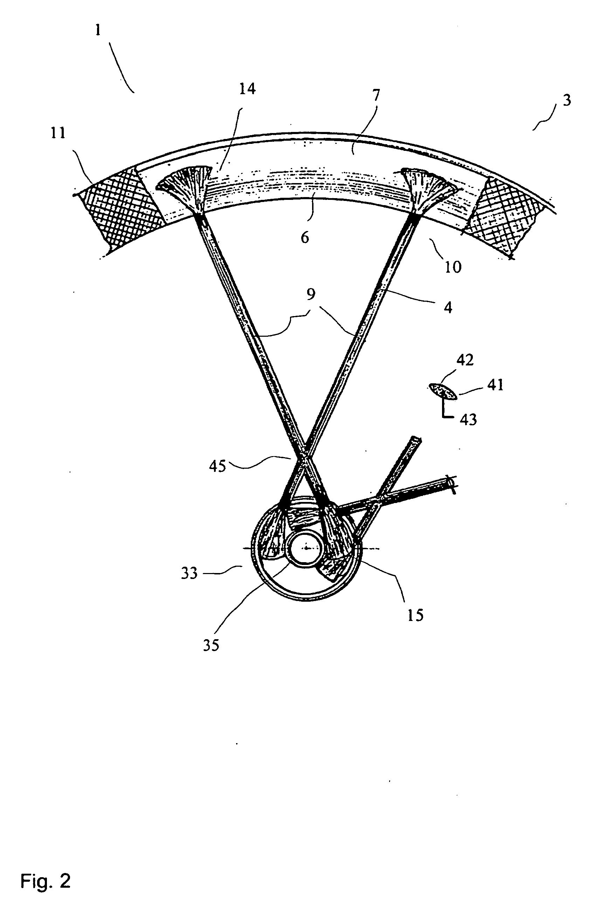

Zur Herstellung des Rades 1 werden zunächst die Speichen 4 hergestellt, die gemäß der Darstellung nach Fig. 1 einen einzelnen Körper 9 aufweisen können, wie es für die radiale Verspeichung vorgesehen ist, oder die zwei gekreuzte Speichenkörper 9 aufweisen können, wie es in Fig. 2 dargestellt ist.

Zur Herstellung der in Fig. 1 abgebildeten Speichen 4 wird eine Deckschicht 41, die hier im Ausführungsbeispiel als einlagiges Gelege ausgeführt ist, in eine erste Halbform 46 eingelegt, nachdem die Halbform 46 mit einem Trennmittel versehen wurde, um ein Anhaften der fertigen Speichen 4 zu vermeiden. Auf die Deckschicht 41 wird anschließend eine Vielzahl paralleler unidirektionaler Fasern 42 aufgelegt, die die Speichenspannung aufnehmen. Dabei wird dafür gesorgt, dass die Mulde 47 der Halbform 46 vollständig ausgefüllt wird bzw., dass etwas mehr Fasern eingelegt werden als Querschnittsfläche zur Verfügung steht.

In eine zweite Halbform wird ebenfalls eine Deckschicht 41 und ebenso eine entsprechende Vielzahl von Fasern 42 eingelegt.

Die Länge der Halbform 46 entspricht der Speichenlänge zwischen dem Nabenkörper 2 und der Felge 3. Die Länge der in die Halbform 46 eingelegten Fasern ist aber größer als die Länge der Halbform 46, sodass an beiden Enden die Einzelfasern 41 über das jeweilige Ende der Halbform 46 überstehen, und zwar vorzugsweise zwischen etwa ein und drei Zentimetern, vorzugsweise etwa 2 Zentimeter.

Die überstehenden Fasern 42 können deshalb aufgefächert werden, wenn die Speiche hergestellt wird, oder wenn die Speiche in die Felge 3 bzw. den Nabenkörper 2 integriert wird. Dadurch wird es mit der Speiche 4 ermöglicht, einen sicheren und festen Halt in der Felge oder in dem Nabenkörper zu gewährleisten, ohne dass aufwändige Verstärkungslagen oder dergleichen in die Bauteile integriert werden müssen, um den nötigen Halt zu gewährleisten.

Die Speichen 4 werden separat vorgefertigt und separat ausgehärtet und können für die Produktion der Räder bevorratet werden.

Grundsätzlich ist zur Herstellung der Speichen und zur Herstellung der Felgen 3 bzw. des gesamten Rades 1 der Einsatz von vorimprägniertem Fasergewebe möglich, es ist aber auch der Einsatz von trockenen Fasern oder Fasergewebe möglich und bevorzugt, die anschließend bei der Fertigung mit einem Harz getränkt werden.

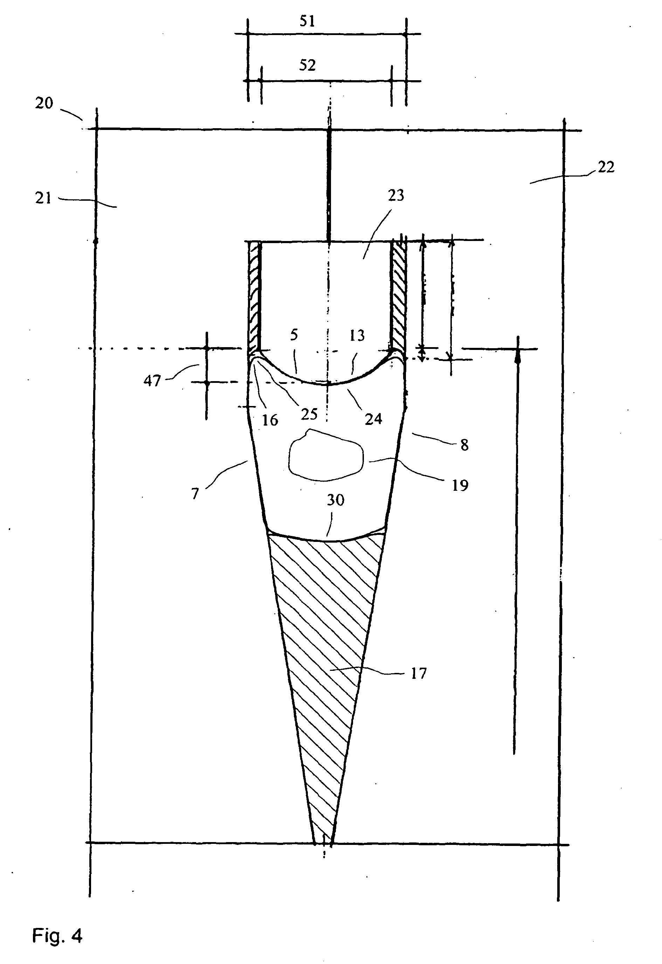

Zur Herstellung des in Fig. 1 abschnittsweise dargestellten Rades 1 wird eine Form 20 verwendet, die Formteile 21 und 22 aufweist (siehe die Fig. 4).

Das eben auf einer Unterlage aufgelegte Formteil 21 wird ebenso wie das Formteil 22 mit einem Trennmittel beschichtet. Anschließend wird auf das Formteil 21 ein Gewebeabschnitt 11 kreisförmig entlang des Umfangs der herzustellenden Felge 3 aufgelegt, sodass der Gewebeabschnitt 11 bei der späteren Felge 3 die Felgenflanke 7 bildet. In analoger Weise wird in das Formteil 22 der Herstellform 20 ein Gewebeabschnitt 12 eingelegt, der die Felgenflanke 8 bildet.

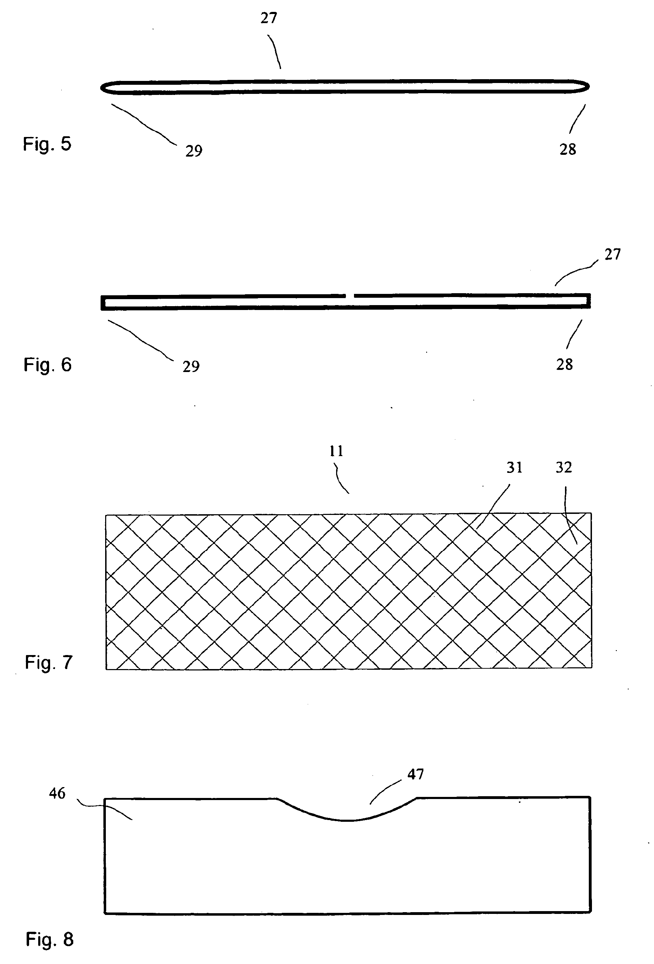

Als Gewebeabschnitte 11 und 12 können die in den Fig. 5 und 6 dargestellten Gewebeabschnitte verwendet werden. Vorzugsweise wird der in Fig. 5 dargestellte Gewebeabschnitt verwendet, der als Gewebeschlauch 26 ausgeführt wird. Der Gewebeschlauch 26 weist Fasern 31 und 32 auf, wie es in Fig. 7 dargestellt ist, die jeweils etwa unter einem Winkel von 45° zur Längsrichtung des Gewebeabschnitts ausgerichtet sind.

Durch die Verwendung eines Gewebeschlauches 26 mit unter Winkeln angeordneten Fasern 31 und 32 wird eine hohe Drappierbarkeit des Gewebeabschnitts 11 erzielt, wodurch der Gewebeabschnitt 11 in hervorragender Weise in der Form 21 einlegbar ist, wobei gleichzeitig die Gewebequalität über den Umfang und über die radiale Richtung der Felgenflanke 7 in gleichbleibender homogener Qualität erhalten bleibt.

Dadurch wird ein hohes Maß an Qualität bei der Herstellung der Felge und des Rades erreicht. Im Stand der Technik hingegen werfen aufgelegte Streifen oftmals Falten an den radial inneren oder an den radial äußeren Stellen der Felge. Gleichzeitig variiert der Maschenabstand und die Maschenweite, wodurch keine homogenen Eigenschaften der Felge und Rades erzielt werden.

Nach dem Auflegen des Gewebeabschnitts 11 werden die Enden 14 der der Felgenflanke 8 zugeordneten Speichen 4 auf den Gewebeabschnitt 11 aufgelegt, wobei die überstehenden Fasern 42 aufgefächert werden, um einen möglichst großen Halt in der Felge zu gewährleisten. Möglich ist es auch, dass die Fasern 42 bei der Herstellung der Speichel 4 schon aufgefächert wurden und im aufgefächerten Zustand platt ausgehärtet werden, sodass die aufgefächerte und bereits ausgehärtete Speiche auf den auf dem Formteil 21 aufliegenden Gewebeabschnitt 11 aufgelegt wird.

Im radial inneren Bereich wurde zentrisch zum Formteil 21 ein Nabenkörperhalter 35 ausgerichtet, auf den der erste Nabenaußendeckel 36, der erste Nabeninnendeckel 37 und anschließend der zweite Nabeninnendeckel 38 und der zweite Nabenaußendeckel 39 aufgeschoben werden. Im radial inneren Bereich werden zwischen dem zweiten Nabenaußendeckel 39 und dem zweiten Nabeninnendeckel 38 die am inneren Speichenende 15 überstehenden Fasern 42 aufgefächert und zwischen den Deckeln 38 und 39 positioniert. Nach Zugabe eines Verbindungsmittels in Form beispielsweise eines Harzes werden die Deckel 38 und 39 aufeinander gepresst und zu einem zweiten Nabendeckel 34 verbunden. Analog wird später mit dem ersten Nabenaußen- und Nabeninnendeckel 36 und 37 verfahren.

Auf die auf dem Gewebeabschnitt 11 angeordneten Speichenanden 14 wird ein Kern 17 aufgelegt, der einen etwa dreieckigen Querschnitt aufweist und dafür vorgesehen ist, im Bereich des Felgenbodens angeordnet zu werden.

Ein Formring 23, dessen radiale innere Oberfläche 24 an die gewünschte Felgenbettform angepasst ist, wird wenigstens auf der inneren Oberfläche 24 mit einem Gewebestreifen belegt. Alternativ oder ergänzend dazu kann ebenfalls ein Gewebeschlauch auf die innere Oberfläche 24 des Formrings 23 aufgelegt werden. Anschließend wird der Formring 23 in das Formteil 21 eingelegt, sodass zwischen dem Kern 17 und dem Formring 23 ein radialer Abstand bzw. Spalt verbleibt.

In dem verbleibenden Spalt wird ein mit einem Gewebeabschnitt 16 umgebener aufblasbarer Schlauch 19 eingeführt. Der den aufblasbaren Schlauch umgebende Gewebeabschnitt 16 kann beispielsweise als Gewebeschlauch 25 ausgeführt sein, der auf den aufblasbaren Schlauch 19 aufgezogen wird. Alternativ dazu kann der aufblasbare Schlauch auch mit einem Gewebestreifen oder dergleichen umwickelt oder umgeben werden, bevor der aufblasbare Schlauch 19 in den Spalt eingelegt wird.

Der Gewebeabschnitt 16 verstärkt im radial äußeren Bereich das Felgenbett und auf den Seiten die Felgenflanken 7 und 8, die auch die Bremsflächen 47 aufweisen. Im radial inneren Bereich verstärkt der Gewebeabschnitt 16 mit einem Quersteg 30 die Felge 3, sodass die Felge 3 besser geeignet ist, die beim Bremsen auftretenden Belastungen aufzunehmen.

Nach dem Einlegen des aufblasbaren Schlauches 19 wird auf das Formteil 21 das Formteil 22 aufgelegt und die Form 20 insgesamt verschlossen. Nach dem Erhöhen des Druckes im aufblasbaren Schlauch 19 wird die Herstellform 20 auf ein erhöhtes Temperaturniveau gebracht, um den Vernetzungsprozess zu beschleunigen.

Gleichzeitig oder zuvor wird der aufblasbare Schlauch 19 unter Druck gesetzt, um eine Verpressung der einzelnen Gewebeabschnitte zu bewirken.

Nach dem Aushärten und Abkühlen der Herstellform 20 wird die Herstellform 20 geöffnet und das Rad entnommen.

Ein bedeutender Vorteil des Rades 1 ist, dass es einheitlich aus dem selben oder doch wenigstens einem ähnlichen Material besteht, so dass die Felge, die Speichen und der Nabenkörper den gleichen Wärmeausdehnungskoeffizienten haben. Bei konventionellen Rädern aus Faserverbundwerkstoffen kann es zu einer Lockerung der Speichenspannung kommen, wenn sich das Rad aufheizt, da Metallspeichen und Faserverbundwerkstoffe unterschiedlich verhalten. Faserverbundwerkstoffe können negative Wärmeausdehnungskoeffizienten aufweisen, was eine Minderung der Speichenspannung noch verstärken kann. Das Rad 1 weist solche Nachteile nicht auf.

Gegenüber den bekannten Dreispeichenrädern aus Faserverbundwerkstoff wird der erhebliche Vorteil einer viel größeren Seitensteifigkeit erzielt.

Durch Einführen einer Nabenhülse 40 zwischen die Nabendeckel 33 und 34 werden die Speichen gespannt. Die Nabenhülse 40 wird mit den Nabendeckeln 33 und 34 verklebt, sodass insgesamt ein einstückiges Rad 1 vorliegt, welches aus Faserverbundwerkstoff besteht.

Ein erheblicher Vorteil des Rades ist, dass die Speichen 4 einen gradlinigen Verlauf von dem Ursprung in der Felge bis in den Nabendeckel bzw. Nabenflansch hinein aufweisen. Das wird dadurch erzielt, dass die Felge einen im Wesentlichen dreieckigen Querschnitt aufweist, wobei der Neigungswinkel derart angepasst ist, dass ein gradliniger Verlauf erzielt wird.

Bei dem in Fig. 2 dargestellten Ausführungsbeispiel eines Rades 1 sind gekreuzte Speichen 4 vorhanden, wobei jede Speiche 4 zwei gekreuzte Speichenkörper 9 aufweist, die in einer Ebene liegen und einstückig miteinander verbunden sind. Das Herstellen erfolgt mit einer entsprechenden Form, in die gekreuzte Faserbündel und Fasergelege eingelegt werden, um die gekreuzten Speichen einstückig herzustellen. An den vier Enden der Speichenkörper 9 stehen dabei die Einzelfasern 42 von den Speichenkörpern 9 ab, um in der Felge bzw. in dem Nabenkörper formschlüssig eingebunden zu werden.

In Fig. 2 ist auch ein Querschnitt des Speichenkörpers 9 abgebildet, der hier im Ausführungsbeispiel etwa elliptisch ist, um einen geringen Luftwiderstand zu erzielen.

## Patentansprüche

1. Verfahren zur Herstellung eines Rades (1), insbesondere für Fahrräder, welches einen Nabenkörper (2) und eine Felge (3) und den Nabenkörper (2) und die Felge (3) verbindende Speichen (4) umfasst, wobei die Felge (3) ein Felgenbett (5), einen Felgenboden (6) und das Felgenbett (5) und den Felgenboden (6) verbindende Felgenflanken (7,8) umfasst, **dadurch gekennzeichnet, dass** es die folgenden Schritte umfasst:
Auflegen wenigstens eines ersten mehrlagigen und einstückigen Gewebeabschnittes (11) eines Fasergewebe umfassenden Materials auf ein erstes Formteil (21) einer Herstellform (20) entlang des Umfangs der Felge, derart, dass der erste Gewebeabschnitt (11) dazu geeignet ist, eine Felgenflanke (7,8) zu bilden,
Auflegen einer ersten Anzahl von Speichen (4) auf das erste Formteil (21) unter vorbestimmten Winkeln zueinander, derart, dass die radial äußeren Speichenenden (14) auf dem ersten Gewebeabschnitt (11) aufliegen,
Auflegen wenigstens eines Kerns (17) auf den ersten Gewebeabschnitt (11),
Auflegen wenigstens eines Gewebestreifens (13) auf eine Innenfläche (24) eines Formringes (23) und Einlegen des Formringes (23) in das erste Formteil (21), wobei der Gewebestreifen (13) wenigstens einen Teil des Felgenbettes (5) bildet,
Umgeben eines aufblasbaren Schlauches (19) mit einem Gewebeabschnitt (16) und Einlegen des aufblasbaren Schlauches (19) in das erste Formteil (11),
Auflegen wenigstens einer zweiten Anzahl von Speichen (4) auf die Herstellform (20) unter vorbestimmten Winkeln zueinander, derart, dass die radial äußeren Speichenenden (19) auf dem Kern aufliegen,
Auflegen eines zweiten mehrlagigen und einstückigen Gewebeabschnittes (12) eines Fasergewebe umfassenden Materials auf ein zweites Formteil (22) der Herstellform (20) entlang des Umfangs der Felge (3), derart, dass der zweite Gewebeabschnitt (12) dazu geeignet ist, die zweite Felgenflanke (8) zu bilden,
Verschließen der Herstellform (20),
Aufblasen des aufblasbaren Schlauches (19) auf einen erhöhten Druck,
Aushärten der harzgetränkten faserverstärkten Materialien,
Entnehmen des Rades (1) aus der Herstellform (20), welches insgesamt ein einstückiges Teil ist.

2. Verfahren nach Anspruch 1, wobei der erste und/oder der zweite Gewebeabschnitt (11, 12) jeweils als Gewebeschlauch (26) ausgebildet ist, der flach gelegt einen mehrlagigen und einstückigen Gewebeabschnitt (11, 12) bildet,
oder wobei der erste und/oder der zweite Gewebeabschnitt (11, 12) entlang wenigstens einer Umklappkante umgeklappt werden, um einen einstückigen und mehrlagigen Gewebeabschnitt zu bilden.

3. Verfahren nach einem der vorhergehenden Ansprüche, wobei die Gewebefasern (31,32) unter einem Winkel von wenigstens 15° und vorzugsweise unter einem Winkel von 45° zur Längserstreckung des Gewebeabschnitts (11, 12) ausgerichtet sind.

4. Verfahren nach einem der vorhergehenden Ansprüche, wobei der Kern (17) auf den ersten Gewebeabschnitt (11) in der Nähe des Felgenbodens (6) aufgelegt wird und insbesondere aus mehreren Teilen besteht, die entlang des Umfangs aufgelegt werden.

5. Verfahren nach einem der vorhergehenden Ansprüche, wobei der Formring (23) radial nach innen eine abgerundete Kontur aufweist, welche an die Form des Felgenbettes (5) angepasst ist, wobei der Formring (23) insbesondere einteilig ausgebildet ist, einen Schlitz aufweist und vorzugsweise etwa parallele Seitenflächen aufweist.

6. Verfahren nach einem der vorhergehenden Ansprüche, wobei der Formring (23) zunächst mit einem Gewebeschlauch und anschließend mit einem Gewebestreifen belegt und wobei der Formring (23) insbesondere auf den Seitenflächen und der Innenfläche (24) mit Gewebematerial belegt wird.

7. Verfahren nach einem der vorhergehenden Ansprüche, wobei der aufblasbare Schlauch (19) mit einem Gewebeschlauch (25) als Gewebeabschnitt (16) umgeben und/oder mit wenigstens einem Gewebestreifen umwickelt wird.

8. Verfahren nach einem der vorhergehenden Ansprüche, wobei der aufblasbare Schlauch (19) in das erste Formteil (21) zwischen den Formring (23) und den Kern (17) oder zwischen den Kern (17) und den Felgenboden (6) eingelegt wird.

9. Verfahren nach einem der vorhergehenden Ansprüche, wobei zentrisch zu der Herstellform (20) ein Nabenkörperhalter (35) angeordnet wird, auf den ein erster Nabenaußendeckel, (36) ein erster Nabeninnendeckel (37), ein zweiter Nabeninnendeckel (38) und ein zweiter Nabenaußendeckel (39) aufgeschoben werden, wobei insbesondere zwischen den zweiten bzw. ersten Nabenaußendeckel (38, 36) und den zweiten bzw. ersten Nabeninnendeckel (39, 37) die radial inneren Speichenenden (15) der ersten bzw. zweiten Speichen (4a) eingelegt werden, bevor der zweite bzw. erste Nabenaußendeckel (38, 36) mit dem zweiten bzw. ersten Nabeninnendeckel (39) in Kontakt gebracht und über ein Verbindungsmittel fest zu einem zweiten bzw. ersten Nabendeckel (34, 33) verbunden wird.

10. Verfahren nach einem der vorhergehenden Ansprüche, wobei die Speichenspannung nach dem Aushärten erzeugt wird, indem zwischen die Nabendeckel (33, 34) ein Nabenrohr (40) eingeführt wird.

11. Rad (1), insbesondere für ein Fahrrad, welche eine Felge (3), einen Nabenkörper (2) und die Felge (3) und den Nabenkörper (2) verbindende Speichen (4) umfasst und im Wesentlichen aus einem faserverstärktem Material besteht, wobei die Felge (3) ein Felgenbett (5), einen Felgenboden (6) und das Felgenbett (5) und den Felgenboden (6) verbindende Felgenflanken (7, 8) umfasst,
**dadurch gekennzeichnet, dass** wenigstens eine Felgenflanke (7, 8) durch einen mehrlagigen und einstückigen Gewebeabschnitt (11) eines Fasergewebe umfassenden Materials gebildet ist.

12. Rad nach Anspruch 11 , wobei die eine Felgenflanke (7) durch einen ersten mehrlagigen und einstückigen Gewebeabschnitt (11)und die andere Felgenflanke (8) durch einen zweiten mehrlagigen und einstückigen Gewebeabschnitt (12) gebildet ist.

13. Rad nach dem vorhergehenden Anspruch, wobei der erste und/oder der zweite Gewebeabschnitt (11, 12) jeweils als Gewebeschlauch (26) ausgebildet ist, der flach gelegt einen mehrlagigen und einstückigen Gewebeabschnitt bildet oder wobei der mehrlagige und einstückige erste und/oder zweite Gewebeabschnitt (11,12) aus einem Gewebestreifen (13) besteht, der entlang wenigstens einer Umklappkante umgeklappt wird, um einen einstückigen und mehrlagigen Gewebeabschnitt zu bilden.

14. Rad nach einem der Ansprüche 11 bis 13, wobei ein Kern (17) auf dem Felgenboden (6) aufliegt, welcher insbesondere aus mehreren Teilen besteht, die entlang des Umfangs angeordnet sind und/oder wobei zwei oder mehr separate Kerne vorgesehen sind.

15. Rad nach einem der Ansprüche 11 bis 14, wobei das Felgenbett (5) durch einen Gewebeschlauch und/oder einen Gewebestreifen gebildet wird.

16. Rad nach einem der Ansprüche 11 bis 15, wobei zwischen Felgenboden (6) und Felgenbett (5) ein Quersteg (30) zur Versteifung der Felge (3) vorgesehen ist, der durch einen Gewebeschlauch oder Gewebeabschnitt gebildet wird.

17. Vorrichtung zur Herstellung eines Rades (1), insbesondere für Fahrräder, welches einen Nabenkörper (2), eine Felge (3) und den Nabenkörper (2) und die Felge (3) verbindende Speichen (4) umfasst, wobei die Felge (3) ein Felgenbett (5), einen Felgenboden (6) und das Felgenbett (5) und den Felgenboden (6) verbindende Felgenflanken (7, 8) aufweist,
wobei eine Herstellform (20) vorgesehen ist, welche ein erstes Formteil (21) umfasst, welches dazu bestimmt ist, einen ersten mehrlagigen und einstückigen Gewebeabschnitt (11) eines Fasergewebe umfassenden Materials aufzunehmen,
wobei das erste Formteil (21) etwa kreisförmig ausgebildet ist und eine an die Außenkontur einer Felgenhälfte angepasste Querschnittsform aufweist,
wobei ein Teilungsring vorgesehen ist, der zentral in der Herstellform (20) angeordnet wird und zur Winkeleinstellung der Speichen (4) dient, die in Aussparungen des Teilungsringes eingelegt werden,
wobei ein Kern (17) vorgesehen ist, der im Bereich des Felgenbodens (6) auf das erste Formteil (21) aufgelegt wird,
wobei ein Formring vorgesehen ist, dessen Innenfläche an die Form des Felgenbettes (5) angepasst ist,
wobei ein zweites Formteil (22) vorgesehen ist, welches dafür vorgesehen ist, auf das erste Formteil (21) verbracht und damit verbunden zu werden, um die Herstellform (20) zu schließen.

## Claims

1. A method of manufacturing a wheel (1), in particular for bicycles, comprising a hub body (2) and a rim (3) and spokes (4) connecting the hub body (2) and the rim (3), wherein the rim (3) comprises a rim well (5), a rim base (6) and rim flanges (7, 8) connecting the rim well (5) and the rim base (6), **characterized in that** it comprises the following steps:
placing at least one first multi-layered and integral fabric section (11) of a material comprising fibrous fabric onto a first mold part (21) of a manufacturing mold (20) along the periphery of the rim, such that the first fabric section (11) is suitable for forming a rim flange (7, 8),
placing a first quantity of spokes (4) on the first mold part (21) at predetermined angles relative to one another such that the radially outwardly spoke ends (14) rest on the first fabric section (11),
placing at least one core (17) on the first fabric section (11),
placing at least one fabric strip (13) onto an inner surface (24) of a mold ring (23) and placing the mold ring (23) into the first mold part (21), wherein the fabric strip (13) forms at least part of the rim well (5),
enveloping an inflatable tube (19) in a fabric section (16) and placing the inflatable tube (19) into the first mold part (11),
placing at least a second quantity of spokes (4) on the manufacturing mold (20) at predetermined angles relative to one another such that the radially outwardly spoke ends (19) rest on the core,
placing a second multi-layered and integral fabric section (12) of a material comprising fibrous fabric on a second mold part (22) of the manufacturing mold (20) along the periphery of the rim (3), such that the second fabric section (12) is suitable for forming the second rim flange (8),
closing the manufacturing mold (20),
inflating the inflatable tube (19) to an elevated pressure,
curing the resin-impregnated fiber-reinforced materials,
removing from the manufacturing mold (20) the wheel (1) which as a whole is an integral element.

2. The method according to claim 1, wherein the first and/or the second fabric section (11, 12) is configured as a fabric tube (26) which, lying flat, forms a multi-layered and integral fabric section (11, 12), or wherein the first and/or the second fabric section (11, 12) are folded over along at least one folding edge to form an integral and multi-layered fabric section.

3. The method according to any of the preceding claims,
wherein the fabric fibers (31, 32) are oriented at an angle of at least 15° and preferably at an angle of 45° to the longitudinal extension of the fabric section (11, 12).

4. The method according to any of the preceding claims,
wherein the core (17) is placed on the first fabric section (11) in the vicinity of the rim base (6) and in particular consists of multiple parts which are placed along the circumference.

5. The method according to any of the preceding claims,
wherein the mold ring (23) has a radially inwardly rounded contour which is matched to the profile of the rim well (5), wherein the mold ring (23) is in particular configured to be integral, comprises a slot and preferably comprises approximately parallel side faces.

6. The method according to any of the preceding claims,
wherein firstly a fabric tube and thereafter a fabric strip is placed on the mold ring (23) and wherein fabric material is in particular placed on the side faces and the inner surface (24) of the mold ring (23).

7. The method according to any of the preceding claims,
wherein the inflatable tube (19) is enveloped in a fabric tube (25) as the fabric section (16) and/or is wrapped in at least one fabric strip.

8. The method according to any of the preceding claims,
wherein the inflatable tube (19) is inserted into the first mold part (21) between the mold ring (23) and the core (17) or between the core (17) and the rim base (6).

9. The method according to any of the preceding claims,
wherein a hub body holder (35) is placed centrally relative to the manufacturing mold (20), onto which a first outer hub cover (36), a first inner hub cover (37), a second inner hub cover (38), and a second outer hub cover (39) are slipped wherein there are inserted in particular between the second and first outer hub covers (38, 36) and the second and first inner hub covers (39, 37), the radially inwardly spoke ends (15) of the first and second spokes (4a), before bringing the second and first outer hub covers (38, 36) in contact with the second and first inner hub covers (39) and firmly joining these by means of a bonding agent to form second and first hub covers (34, 33).

10. The method according to any of the preceding claims,
wherein the spoke tension is generated after curing in that a hub tube (40) is inserted between the hub covers (33, 34).

11. A wheel (1), in particular for a bicycle, comprising a rim (3), a hub body (2), and spokes (4) connecting the rim (3) and the hub body (2) and substantially consisting of a fiber-reinforced material, wherein the rim (3) comprises a rim well (5), a rim base (6), and rim flanges (7, 8) connecting the rim well (5) and the rim base (6), **characterized in that** at least one rim flange (7, 8) is formed by a multi-layered and integral fabric section (11) of a material comprising fibrous fabric.

12. The wheel according to claim 11, wherein one (7) of the rim flanges is formed by a first multi-layered and integral fabric section (11) and the other rim flange (8), by a second multi-layered and integral fabric section (12).

13. The wheel according to the preceding claim, wherein the first and/or the second fabric section (11, 12) is configured as fabric tube(s) (26) which, lying flat, forms a multi-layered and integral fabric section or wherein the multi-layered and integral first and/or second fabric section(s) (11, 12) consists of a fabric strip (13) folded over along at least one folding edge to form an integral and multi-layered fabric section.

14. The wheel according to any of the claims 11 to 13, wherein a core (17) rests on the rim base (6) which in particular consists of multiple parts placed along the circumference and/or wherein two or more separate cores are provided.

15. The wheel according to any of the claims 11 to 14, wherein the rim well (5) is formed by a fabric tube and/or a fabric strip.

16. The wheel according to any of the claims 11 to 15, wherein a transverse web (30) is provided between rim base (6) and rim well (5) for reinforcing the rim (3), which is formed by a fabric tube or a fabric section.

17. A device for manufacturing a wheel (1) in particular for bicycles, comprising a hub body (2), a rim (3) and spokes (4) connecting the hub body (2) and the rim (3), wherein the rim (3) comprises a rim well (5), a rim base (6), and rim flanges (7, 8) connecting the rim well (5) and the rim base (6),
wherein a manufacturing mold (20) is provided which comprises a first mold part (21) intended to receive a first multi-layered and integral fabric section (11) of a material comprising fibrous fabric,
wherein the first mold part (21) is configured approximately as a circle, having a cross-section matched to the outer contour of a rim half,
wherein a segmentation ring is provided which is centrally positioned in the manufacturing mold (20), serving for angular adjustment of the spokes (4) which are inserted in recesses of the segmentation ring,
wherein a core (17) is provided which is placed onto the first mold part (21) in the region of the rim base (6),
wherein a mold ring is provided whose inner surface is matched to the shape of the rim well (5),
wherein a second mold part (22) is provided intended to be placed on the first mold part (21) and to be connected with it to close the manufacturing mold (20).

## Revendications

1. Procédé de fabrication d'une roue (1), en particulier pour bicyclettes, comprenant un corps de moyeu (2), une jante (3) et des rayons (4) reliant le corps de moyeu (2) à la jante (3), celle-ci comprenant un creux de jante (5), une base de jante (6) et des flancs de jante (7, 8) reliant le creux (5) à la base de la jante (6), **caractérisé en ce qu'**il comprend les étapes suivantes :
Pose d'au moins une première partie (11), multicouche et d'un seul tenant, d'un matériau comprenant un tissu à fibres sur une première pièce moulée (21) d'un moule de production (20) le long de la circonférence de la jante, de sorte que la première partie de matériau tissé (11) soit propre à former un flanc de jante (7, 8),
Pose d'une première série de rayons (4) sur la première pièce moulée (21) avec des angles d'entrelacement des rayons prédéfinis, de sorte que les extrémités de rayons extérieures radiales reposent sur la première partie de matériau tissé (11),
Pose d'au moins un noyau (17) sur la première partie de matériau tissé (11),
Pose d'au moins une bande de matériau tissé (13) sur un plan interne (24) d'un cerceau moulé (23) et installation dudit cerceau moulé (23) dans la première pièce moulée (21), la bande de matériau tissé (13) formant au moins une partie du creux de la jante (5),
Enrobage d'une chambre à air gonflable (19) dans une partie de matériau tissé (16) et installation de ladite chambre à air gonflable (19) dans la première pièce moulée (11),
Pose d'au moins une deuxième série de rayons (4) sur le moule de production (20) avec des angles d'entrelacement des rayons prédéfinis, de sorte que les extrémités de rayons extérieures radiales (19) reposent sur le noyau,
Pose d'une deuxième partie (12), multicouche et d'un seul tenant, d'un matériau comprenant un tissu à fibres sur une deuxième pièce moulée (22) du moule de production (20) le long de la circonférence de la jante (3), de sorte que la deuxième partie de matériau tissé (12) soit propre à former le deuxième flanc de jante,
Fermeture du moule de production (20),
Gonflage de la chambre à air gonflable (19) à une pression élevée,
Durcissement des matériaux renforcés de fibres et imprégnés de résine,
Enlèvement de la roue (1) du moule de production (20), ladite roue étant au total d'une seule pièce.

2. Procédé selon la revendication 1, la première et/ou la deuxième partie de matériau tissé (11, 12) étant respectivement conçues comme chambre à air en matériau tissé (26) qui, à plat, forme une partie de matériau tissé multicouche et d'un seul tenant (11, 12),
ou la première et/ou la deuxième partie de matériau tissé (11, 12) étant repliées le long d'au moins une pliure afin de former une partie de matériau tissé multicouche et d'un seul tenant.

3. Procédé selon l'une quelconque des revendications précédentes, les fibres du tissu (31, 32) étant placées avec un angle d'au moins 15° et de préférence avec un angle de 45° par rapport à l'axe longitudinal de la partie de matériau tissé (11, 12).

4. Procédé selon l'une quelconque des revendications précédentes, le noyau (17) étant disposé sur la première partie de matériau tissé (11) à proximité de la base de la jante (6) et se composant en particulier de plusieurs pièces disposées le long de la circonférence.

5. Procédé selon l'une quelconque des revendications précédentes, le cerceau moulé (23) présentant radialement vers l'intérieur un bord arrondi adapté à la forme du creux de jante (5), le cerceau moulé (23) étant en particulier conçu en un seul tenant, avec une fente et de préférence des plans latéraux à peu près parallèles.

6. Procédé selon l'une quelconque des revendications précédentes, le cerceau moulé (23) étant d'abord recouvert d'une chambre à air en matériau tissé et ensuite d'une bande de matériau tissé, et le cerceau moulé (23) étant recouvert en particulier sur ses plans latéraux et sur son plan interne (24) d'un matériau tissé.

7. Procédé selon l'une quelconque des revendications précédentes, la chambre à air gonflable (19) étant entourée d'un tuyau en matériau tissé (25) en tant que partie de matériau tissé (16) et/ou étant enrobée d'au moins une bande de matériau tissé.

8. Procédé selon l'une quelconque des revendications précédentes, la chambre à air gonflable (19) étant installée dans la première pièce moulée (21) entre le cerceau moulé (23) et le noyau (17) ou entre le noyau (17) et la base de la jante (6).

9. Procédé selon l'une quelconque des revendications précédentes, un support retenant le corps de moyeu (35) étant centré sur le moule de production (20), un premier cache-moyeu extérieur (36), un premier cache-moyeu intérieur (37), un deuxième cache-moyeu intérieur (38) et un deuxième cache-moyeu extérieur (39) étant disposés sur ledit support, les extrémités de rayons (15) radiales intérieures des premiers ou des deuxièmes rayons (4a) particulièrement étant installées entre le deuxième ou le premier cache-moyeu extérieur (38, 36) et le deuxième ou le premier cache-moyeu intérieur (39, 37) avant que le deuxième ou le premier cache-moyeu extérieur (38, 36) n'entrent en contact avec le deuxième ou le premier cache-moyeu intérieur (39) et ne soient reliés fixement par le biais d'un moyen d'assemblage à un deuxième ou un premier cache-moyeu (34, 33).

10. Procédé selon l'une quelconque des revendications précédentes, la tension de rayon étant obtenue après le durcissement en ce qu'est introduit une tige de moyeu (40) entre les caches-moyeu (33, 34).

11. Roue (1), en particulier pour une bicyclette, comprenant une jante (3), un corps de moyeu (2) et des rayons (4) reliant la jante au corps de moyeu (2), et composée sensiblement d'un matériau renforcé de fibres, la jante (3) comprenant un creux de jante (5), une base de jante (6) et des flancs de jante (7, 8) reliant le creux de la jante (5) à la base de la jante (6),
**caractérisée en ce qu'**au moins un flanc de jante (7, 8) est formé d'une partie (11), multicouche et d'un seul tenant, d'un matériau comprenant un tissu à fibres.

12. Roue selon la revendication 11, ledit flanc de jante (7) étant formé d'une première partie multicouche et d'un seul tenant de matériau tissé (11), et l'autre flanc de jante (8) d'une deuxième partie multicouche et d'un seul tenant de matériau tissé (12).

13. Roue selon la revendication précédente, la première et/ou la deuxième partie de matériau tissé (11, 12) étant respectivement conçues comme chambre à air en matériau tissé (26) qui, à plat, forme une partie de matériau tissé multicouche et d'un seul tenant, ou la première et/ou la deuxième partie, multicouche et d'un seul tenant, de matériau tissé (11, 12) se composant d'une bande de matériau tissé (13) repliée le long d'au moins une pliure afin de former une partie de matériau tissé multicouche et d'un seul tenant.

14. Roue selon les revendications 11 à 13, un noyau (17) reposant sur la base de la jante (6), ledit noyau se composant en particulier de plusieurs parties agencées le long de la circonférence et/ou deux ou plusieurs noyaux séparés étant prévus.

15. Roue selon l'une des revendications 11 à 14, le creux de la jante (5) étant formé par une chambre à air en matériau tissé et/ou une bande de matériau tissé.

16. Roue selon les revendications 11 à 15, un élément transversal (30) étant prévu entre la base (6) et le creux de la jante (5) pour rigidifier la jante, ledit élément étant formé d'une chambre à air en matériau tissé ou d'une partie de matériau tissé.

17. Procédé de fabrication d'une roue (1), en particulier de bicyclettes, laquelle comprend un corps de moyeu (2), une jante (3) et des rayons (4) reliant le corps de moyeu (2) à la jante (3), la jante (3) présentant un creux de jante (5), une base de jante (6) et des flancs de jante (7, 8) reliant le creux de la jante (5) à la base de la jante (6),
un moule de production étant prévu, qui comprend une première pièce moulée (21), celle-ci étant destinée à recevoir une première partie (11), multicouche et d'un seul tenant, d'un matériau comprenant un tissu à fibres,
la première pièce moulée (21) ayant une forme circulaire et présentant une forme de section adaptée aux contours extérieurs d'une moitié de jante,
un anneau de division étant prévu, qui est agencé au centre du moule de production (20) et qui sert à régler les angles des rayons (4), lesquels sont insérés dans les trous de l'anneau de division,
un noyau (17) étant prévu, qui est disposé dans la zone de la base de la jante (6) sur la première pièce moulée (21),
un cerceau moulé étant prévu, dont le plan interne épouse la forme du creux de la jante (5),
une deuxième pièce moulée (22) étant prévue et destinée à être installée sur la première pièce moulée (21) et à y être reliée dans le but de fermer le moule de production (20).
